# EUROPÄISCHE PATENTSCHRIFT

(11) **EP 1 341 069 B1**
(45) Veröffentlichungstag und Bekanntmachung des Hinweises auf die Patenterteilung: **23.08.2006**
(21) Anmeldenummer: 03002808.8
(22) Anmeldetag: 07.02.2003
(51) Int. Cl.: G05D 7/01

(54) **Durchflussregler und Ventil mit Durchflussregler**
Flow controller and valve with flow controller
Regulateur de debit et soupape avec un regulateur de debit

(30) Priorität: 09.02.2002 DE 10205406
(43) Veröffentlichungstag der Anmeldung: 03.09.2003
(73) Patentinhaber: Honeywell Technologies Sarl, 1110 Morges (CH)
(72) Erfinder: Grumpe, Volker, 59757 Arnsberg (DE)
(74) Vertreter: Basfeld, Rainer

(56) Entgegenhaltungen:
- DE-U- 20 022 166
- US-A- 3 093 155
- US-A- 4 383 550
- US-A1- 2002 100 506

## Beschreibung

Die vorliegende Erfindung betrifft einen Durchflussregler umfassend ein feststehendes Mantelteil, welches im wesentlichen in axialer Richtung von einem Fluid durchströmt wird und ein innerhalb des Mantelteils gegen eine Federkraft axial verschiebbares Regelelement, wobei der Querschnitt von Durchflussöffnungen durch den Durchflussregler abhängig von der jeweiligen Stellung des Regelelements variiert. Die Erfindung betrifft weiterhin ein Thermostatventil, in dessen Gehäuse ein Durchflussregler der vorgenannten Art eingesetzt ist, wobei das Regelelement eine geschlossene Umfangsfläche aufweist, und das Mantelteil in dem Abschnitt, innerhalb dessen das Regelelement verschiebbar ist, einen variierenden Innenquerschnitt aufweist, so dass sich der verfügbare Durchflussquerschnitt für das Fluid zwischen dem äußeren Umfang des Regelelements und dem Innenquerschnitt des Mantelteils bei Einwärtsbewegung des Regelelements reduziert.

Durchflussregler der eingangs genannten Gattung sind aus dem Stand der Technik bekannt. Beispielsweise beschreibt die DE 2 258 787 A1 einen Durchflussregler, bei dem im Umfangsbereich des Regelelements verschiedene Bohrungen vorgesehen sind, wohingegen der Innenquerschnitt des Mantelteils, innerhalb dessen sich das Regelelement in axialer Richtung verschiebt, gleichbleibend ist. Der Durchfluss erfolgt durch Durchlassöffnungen in zylindrischen Flächen des Regelelements, wobei sich diese Durchlassöffnungen beispielsweise in axialer Verschieberichtung des Regelelements verjüngen, so dass erreicht wird, dass innerhalb eines Bereichs mit sich änderndem Druck der Durchfluss durch die Anordnung aus Regelelement und Mantelteil im wesentlichen konstant bleibt. Bei dieser bekannten Lösung ist das Regelelement ein Teil aus Blech mit einer relativ dünnen Wandung, so dass das Vorsehen der spezifischen Durchlassöffnungen z. B. durch Stanzen und damit die Herstellung dieses Bauteils insgesamt technisch aufwendig und schwierig ist.

Die PCT-Schrift WO 91/10949 beschreibt einen Durchflussregler, bei dem das Regelelement eine Kugel ist, die innerhalb einer Bohrung eines Mantelteils gegen eine Federkraft axial verschiebbar ist. Am Umfang der Bohrung des Mantelteils befinden sich zwei achsparallel verlaufende Nuten, die unterschiedlich lang sind. Das Fluid fließt am Umfang des Regelelements vorbei durch diese Nuten. Das Fluid strömt zwar in axialer Richtung in die Bohrung des Mantelteils hinein, verlässt diese jedoch über eine relativ kleine radiale Bohrung. Diese radiale Bohrung liegt in Höhe des Endes der einen achsparallelen Umfangsnut. Bei diesem Durchflussregler haben die Nuten keine Regelfunktion, in dem Sinne, dass sich der Durchflussquerschnitt durch die Nuten bei Bewegung des Regelelements verändert, sondern die Nuten dienen als Bypass über das als Kugel ausgebildete Regelelement. Die Regelung erfolgt über die quer zur Strömungsrichtung ausgerichtete Austrittsöffnung. Es baut sich ein Differenzdruck vor und hinter der Kugel auf. Das Fluid strömt zunächst in den Raum hinter der Kugel und dann wieder zurück durch die radiale Austrittsöffnung. Durch diese Anordnung wird es zu Turbulenzen kommen, wobei auch mit erhöhten Strömungsgeräuschen zu rechnen ist.

Die Druckschrift mit der Veröffentlichungsnummer DE 200 22 166 U1 offenbart einen Durchflussregler der eingangs genannten Art. Bei diesem Durchflussregler wird der durchströmbare Querschnitt in einer unteren Stellung des Regelelementes im Wesentlichen von der Stellung des Regelementes relativ zu einem Ventilsitz bestimmt. Ist eine bestimmte Stellung erreicht, bleibt der durchströmbare Querschnitt jedoch unverändert, auch wenn das Regelelement weiter verschoben wird. Dadurch kann auch bei einem weiteren Verschieben des Regelementes kein größerer Volumenstrom erreicht werden.

Die Aufgabe der vorliegenden Erfindung besteht darin, einen Durchflussregler der eingangs genannten Gattung zur Verfügung zu stellen, der bei Beibehaltung der genannten Eigenschaften hinsichtlich der Durchflusscharakteristik eine einfachere Herstellung ermöglicht und somit eine sinnvolle Alternative liefert.

Die Lösung dieser Aufgabe liefert ein Durchflussregler der eingangs genannten Gattung mit den kennzeichnenden Merkmalen des Hauptanspruchs.

Die Aufgabe der Erfindung besteht weiterhin darin, ein Ventil zur Verfügung zu stellen, welches einen Durchflussregler mit den genannten Eigenschaften umfasst, daneben weitere Funktionen eines Thermostatventils zur Verfügung stellt und dabei eine einfache platzsparende Bauform aufweist. Die Lösung dieser Aufgabe liefert ein Thermostatventil, in dessen Gehäuse ein Durchflussregler der zuvor genannten erfindungsgemäßen Art eingesetzt ist, entsprechend den Merkmalen des Patentanspruchs 15.

Bei der erfindungsgemäßen Lösung befinden sich die Öffnungen zur Durchflussregelung nicht in dem Regelelement, welches sich in dem Mantelelement bewegt, sondern in dem nichtbeweglichen Mantelelement. Die Durchflusscharakteristik ergibt sich durch einen variierenden Innenquerschnitt des Mantelteils, wodurch man erreicht, dass sich der verfügbare Durchflussquerschnitt für das Fluid, der sich zwischen dem äußeren Umfang des Regelelements und dem Innenquerschnitt des Mantelteils ergibt, bei variierendem Differenzdruck und somit Einwärtsbewegung des Regelelements reduziert, wodurch der Durchflussregler über einen bestimmten variierenden Differenzdruckbereich einen im wesentlichen konstanten Volumenstrom liefert. Der variierende Innenquerschnitt ergibt sich dabei durch wenigstens eine am inneren Umfang des Mantelteils vorhandene im wesentlichen in axialer Richtung verlaufender oder nutförmige Ausbuchtung, deren Querschnitt sich in Einwärtsrichtung (bezogen auf die Bewegungsrichtung des Regelelements) reduziert.

Diese Nut oder nutförmige Ausbuchtung des Mantelteils kann beispielsweise in axialer Richtung gesehen mindestens abschnittsweise eine etwa parabolische Kontur aufweisen, d. h., der verfügbare Querschnitt durch diese Nut ändert sich vorzugsweise abschnittsweise nicht linear. Man kann dabei z. B. die Tiefe oder die Breite der Nut ändern oder auch die Querschnittsform der Nut, die auch einen nicht rechteckigen Querschnitt haben kann. Das Regelelement bewegt sich dabei vorzugsweise innerhalb einer zylindrischen oder leicht kegelförmigen Bohrung des Mantelteils. Das Regelelement ist dabei vorzugsweise in seinem Durchmesser so dimensioniert, dass es maßlich weitgehend passend in der Bohrung des Mantelteils geführt ist. Für die Form des Regelelements kommen dabei die unterschiedlichsten Grundformen in Betracht. Dieses Regelelement kann beispielsweise zylindrisch oder mindestens teilweise in der Grundform zylindrisch sein. Ebenso gut ist aber denkbar ein etwa kugelförmiges Regelelement zu verwenden. Angestrebt wird dabei aber, dass das Regelelement den Durchmesser der genannten Bohrung im wesentlichen ausfüllt, so dass der Durchflussquerschnitt durch den dann verbleibenden Freiraum definiert wird, der sich durch die Nuten ergibt. Unerwünschte Nebenströme zwischen dem Regelelement und dem Mantelteil sind also vorzugsweise zu vermeiden. Hier kann man beispielsweise das Regelelement an seinem Umfang mit wenigstens einem Dichtelement wie beispielsweise einer Dichtlippe versehen, die zur Innenwand der Bohrung hin abdichtet. Es verbleibt dann ein genau definierter Freiraum für den Durchfluss des Fluids, der durch den Querschnitt der Nut oder der Nuten bestimmt wird. Wenn man das Regelelement beispielsweise aus Kunststoff herstellt, hat man den Vorteil, dass man eine oder mehrere Dichtlippen, die man zu dem genannten Zweck benötigt, direkt an dem Regelelement anspritzen kann. Die Verwendung eines Regelelements, welches beispielsweise ein Kunststoffspritzteil ist, hat den Vorteil einer genauen und kostengünstigen Fertigung, insbesondere bei der Herstellung größerer Serien.

Die maximale Hubposition des Regelelements wird vorzugsweise durch einen Absatz am Ende der Bohrung des Mantelteils definiert, der als Anschlag dient.

Die erfindungsgemäße Lösung mit Nut oder Nuten in dem Mantelteil hat auch den weiteren Vorteil, dass man bei verschiedenen Durchflussreglern, die für unterschiedliche Durchflussmengen vorgesehen sind, ein im Prinzip gleiches Regelelement verwenden kann, wobei man lediglich die Anzahl der Nuten in dem Mantelteil variiert. Bei im übrigen gleicher Bauart kann man beispielsweise durch Vorsehen von zwei Nuten mit dem gleichen Querschnitt und der gleichen veränderlichen Querschnittscharakteristik bei gleich ausgebildetem Regelelement einen Durchflussregler mit doppeltem Volumenstrom schaffen. Häufig wird eine Serie verschiedener Durchflussregler mit unterschiedlichen Volumenströmen benötigt, die man erfindungsgemäß dadurch zur Verfügung stellen kann, dass man bei dem kleinsten gewünschten Volumenstrom nur eine Nut in das Mantelteil einbringt, so dass man dann durch zwei, drei, vier und mehr Nuten den Volumenstrom vervielfachen kann, ohne dass andere Änderungen in der Bauform des Durchflussreglers notwendig sind. Dies reduziert die Anzahl der insgesamt notwendigen Teile für eine solche Serie von Durchflussreglern mit verschiedenen Volumenströmen.

Gegenstand der Erfindung ist weiterhin ein Thermostatventil, in dessen Gehäuse ein Durchflussregler der genannten Art eingesetzt ist. Ein solches Thermostatventil erfüllt vorzugsweise weitere Funktionen, insbesondere weist dieses ein federbelastetes Huboberteil mit Ventilspindel und Verschlussstück auf, dem ein Ventilsitz im Gehäuse zugeordnet ist, so dass man das Ventil automatisch öffnen oder schließen kann. Gemäß einer alternativen Variante der Erfindung ist aber auch ein manuell betätigbares Ventiloberteil mit Verschlusskörper möglich für ein manuelles Öffnen oder Schließen des Ventils.

Um zu verhindern, dass sich mit dem Fluid mitgerissene Partikel in dem Durchflussregler insbesondere zwischen dem Regelelement und dem Mantelteil festsetzen, verwendet man vorzugsweise im Inneren des Gehäuses des Thermostatventils einen Schmutzfänger, der dem Durchflussregler in Strömungsrichtung vorgeschaltet ist. Ein solcher Schmutzfänger kann beispielsweise ein Drahtsieb oder dergleichen sein.

Ein Thermostatventil der genannten Art hat gemäß einer Weiterbildung der Erfindung einen ersten radial abgehenden Eingangsstutzen und vorzugsweise einen mit axialem Versatz zu dem Eingangsstutzen angeordneten ebenfalls radial abgehenden Ausgangsstutzen. Besonders vorteilhaft ist eine Bauform der genannten Art in der sogenannten Doppeleckausführung, da sie den Vorteil einer geringen Bauhöhe hat, weil sich alle Gehäuseöffnungen in einer Ebene befinden. Außerdem ist die geringe Baulänge vorteilhaft, die durch das längste Bauteil definiert wird, welches in diesem Fall der Durchflussreglereinsatz ist. Die Anschlüsse im Bereich des Eingangsstutzens und des Ausgangsstutzens sind zueinander parallel und erstrecken sich zu gegenüberliegenden Seiten des Gehäuses hin. Die Anzahl der Gehäuseöffnungen wird erfindungsgemäß minimiert und die Gehäuseform ist besonders strömungsgünstig für einen geringen Strömungswiderstand.

Das genannte federbelastete Huboberteil bzw. das manuell zu betätigende Ventiloberteil kann in axialer Verlängerung zu einem Mittelteil des Gehäuses angeordnet sein, wobei das Mittelteil den Durchflussregler aufnimmt und die Achse des Ausgangsstutzens ist vorzugsweise rechtwinklig zur Achse der Hubbewegung des Verschlussstücks angeordnet. Wenn man einen weiteren Stutzen am Gehäuse vorsieht, der vorzugsweise am gegenüberliegenden Ende zu dem federbelasteten Huboberteil angeordnet ist und der beispielsweise über ein einschraubbares Verschlussstück verschließbar ist, kann man dort einen Zugang zum Gehäuseinneren schaffen, insbesondere für Wartungszwecke, beispielsweise um den genannten Schmutzfänger auszutauschen. Auch dieser weitere Stutzen und der Stutzen für das federbelastete Huboberteil liegt dabei vorzugsweise in der gleichen Ebene wie Eingangsstutzen und Ausgangsstutzen.

Die in den Unteransprüchen genannten Merkmale betreffen bevorzugte Weiterbildungen des erfindungsgemäßen Durchflussreglers bzw. des erfindungsgemäßen Thermostatventils. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben. Dabei zeigen
- Fig. 1: eine Ansicht eines erfindungsgemäßen Durchflussreglers im Längsschnitt;
- Fig. 2: einen Querschnitt durch den Durchflussregler gemäß Figur 1 entlang der Linie II II von Figur 1;
- Fig. 3: einen Querschnitt durch den Durchflussregler entlang der Linie III III von Figur 1 gesehen;
- Fig. 4: einen Längsschnitt durch ein erfindungsgemäßes Thermostatventil, welches sich automatisch öffnen bzw. schließen lässt;
- Fig. 5: einen Längsschnitt durch ein Ventil gemäß einer Variante der Erfindung, welches manuell geöffnet bzw. geschlossen wird;
- Fig. 6: eine vergrößerte Einzelansicht eines Regelelements.

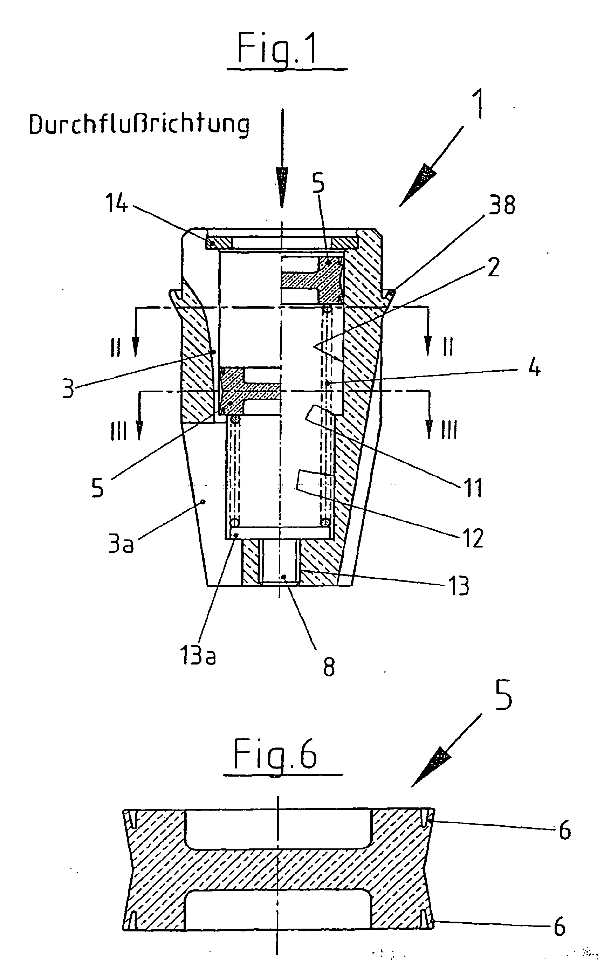

Zunächst wird auf die Figuren 1 bis 3 Bezug genommen. Die Längsschnittdarstellung gemäß Figur 1 zeigt einen erfindungsgemäßen Durchflussregler, welcher ein Mantelteil 1 umfasst, welches im Prinzip eine hülsenartige, teilweise zylindrische und rohrförmige Grundform aufweist. Dieses Mantelteil 1 weist in einem oberen Abschnitt eine zylindrische Bohrung 2 auf, innerhalb derer sich ein Regelelement 5 axial verschieblich bewegen kann. Figur 1 zeigt dieses Regelelement 5 in der rechten Zeichnungshälfte in einer oberen Position und man erkennt, dass sich unterhalb des Regelelements 5 eine Druckfeder 4 befindet. Der Pfeil über der Schnittdarstellung zeigt die Durchflussrichtung durch den erfindungsgemäßen Durchflussregler. Wird nun aufgrund eines Differenzdrucks im Strömungsweg vor bzw. nach dem Durchflussregler das Regelelement 5 beaufschlagt, dann bewegt sich dieses gegen die Kraft der Druckfeder bei steigendem Differenzdruck in axialer Richtung innerhalb der Bohrung 2 nach unten bis in die Maximalposition, die in Figur 1 in der linken Zeichnungshälfte dargestellt ist und bei der das Regelelement 5 durch einen Absatz 11 am Ende der Bohrung 2 einen Anschlag in seiner maximalen Hubposition findet. Lässt dagegen der Druck nach, dann bewegt sich das Regelelement 5 zurück, da es an der Unterseite von der durch die Druckfeder 4 erzeugten Gegenkraft beaufschlagt wird. Unterhalb des Absatzes 11 ist eine weitere Bohrung 12 in dem Mantelteil 1, die die Druckfeder 4 aufnimmt und die, wie man sieht, einen geringeren Querschnitt hat, als die obere Bohrung 2, wodurch der Absatz 11 am Ende der oberen querschnittsweiteren Bohrung 2 gebildet ist. Nach unten hin schließt sich an die Bohrung 12 mit geringerem Durchmesser eine Gewindebohrung 13 an, die eine Justierschraube 8 aufnimmt, welche einen Innensechskant aufweist. Auf dem Kopf 13a dieser Justierschraube 8 stützt sich die Unterseite der Druckfeder 4 ab. Dadurch besteht die Möglichkeit, durch herstellerseitiges Justieren, indem die Justierschraube 8 weiter hereingeschraubt wird in die Gewindebohrung 13 oder weiter aus dieser herausgeschraubt wird, eine Feineinstellung und Eichung der ursprünglichen Federkraft der Druckfeder 4 vorzunehmen.

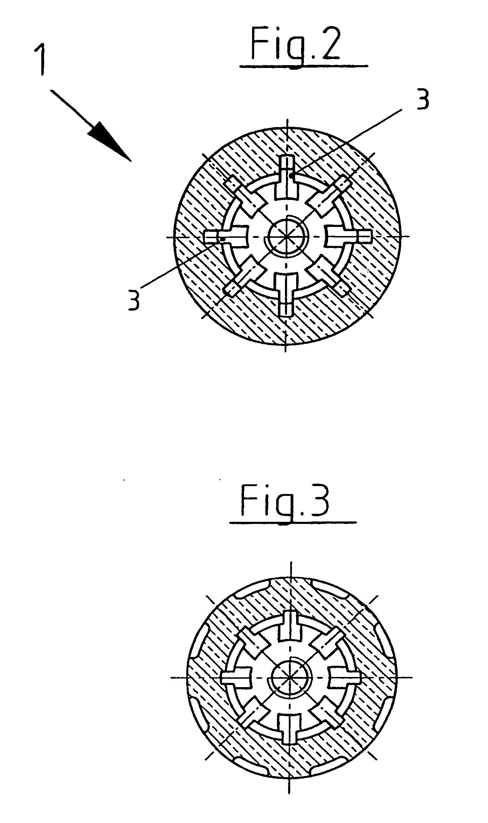

Wie man weiterhin aus Figur 1 und auch aus den Figuren 2 und 3 erkennen kann, befinden sich in Längsrichtung, d. h., in axialer Richtung verlaufende Nuten 3 im Bereich der Innenseite des Mantelteils 1, wobei mehrere solcher Nuten 3 über den inneren Umfang des Mantelteils verteilt angeordnet sind, beispielsweise acht solcher Nuten wie man in Figur 2 erkennt. Diese Nuten 3 erstrecken sich durch die gesamte Länge der Wandung des Mantelteils 1, sind jedoch etwa in der unteren Hälfte des Mantelteils nach außen hin offen, so dass sich Schlitze 3a ergeben, durch die das Wasser radial nach außen austreten kann, wie man Figur 1 entnehmen kann. Jedoch ist die Tiefe der Nut 3 nicht gleichbleibend, sondern im oberen Bereich und zwar im Bereich der Bohrung 2, innerhalb derer sich das Regelelement 5 bewegen kann, nimmt die Nuttiefe 3 ab bis zu dem Absatz 11, wobei sich in dem Abschnitt der Wandung, der in Figur 1 links gezeigt ist, und der sich in der Bohrung 2 bis zu dem Absatz 11 erstreckt, eine etwa parabolische Kontur der Wandung des Mantelteils 1 mit weiter einwärts abnehmender Nuttiefe ergibt. Dadurch verringert sich der Freiraum zwischen dem äußeren Umfang des Regelelements 5 und der Innenseite der Nut, so dass bei einer Stellung, in der sich das Regelelement weiter oben befindet (siehe Figur 1 rechts) eine größere Menge an Fluid durch die Nuten 3 fließen kann, als wenn sich das Regelelement 5 weiter unten befindet bis zu einem minimalen Volumenstrom, der durch die maximale in der Zeichnung gemäß Figur 1 links dargestellte Hubposition des Regelelements 5 gegeben ist, bei der dieses auf dem Absatz 11 aufliegt. Somit wird bei zunehmendem Differenzdruck, bei dem sich das Regelelement 5 weiter einwärts in der Bohrung 2 in Richtung auf den Absatz 11 verschiebt, der für das Fluid verfügbare Querschnitt immer weiter verringert. Dadurch lässt sich innerhalb eines vorgegebenen Druckbereichs ein konstanter Volumenstrom erzeugen. Für verschiedene gewünschte Volumenströme kann man im Prinzip Durchflussregler mit Regelelementen der in Figur 1 gezeigten Art verwenden, die ähnlich aufgebaut sind, wobei man lediglich die Anzahl der vorhandenen Nuten 3 variiert, so dass man beispielsweise bei Vorsehen von zwei Nuten anstelle von einer Nut den Volumenstrom verdoppeln kann usw. Um eine Ausgangsposition des Regelelements 5 vorzugeben (siehe Figur 1, rechte Zeichnungshälfte), in der der maximale Durchflussquerschnitt durch die Nuten zwischen Regelelement 5 und Wandung des Mantelteils 1 gegeben ist, dient ein endseitig in das Mantelteil 1 eingesetzter Anschlag 14.

Das Regelelement 5 weist, wie man aus Figur 1 und Figur 6 erkennt, einen geschlossenen Boden auf, so dass es die gesamte Bohrung 2 des Mantelteils abdeckt und der Strom des Fluids nur seitlich durch die Nuten 3 erfolgen kann, wohingegen über beispielsweise angespritzte Dichtlippen 6, die vorzugsweise vorderseitig und rückseitig jeweils am Umfang an dem Regelelement 5 angebracht sind (siehe Figur 6), das Regelelement zur Innenwandung der Bohrung 2 des Mantelteils 1 hin abdichtet, so dass dort ein Nebenstrom des Fluids verhindert wird. Dadurch wird der Volumenstrom durch den Querschnitt der Nut 3 bzw. der Nuten definiert.

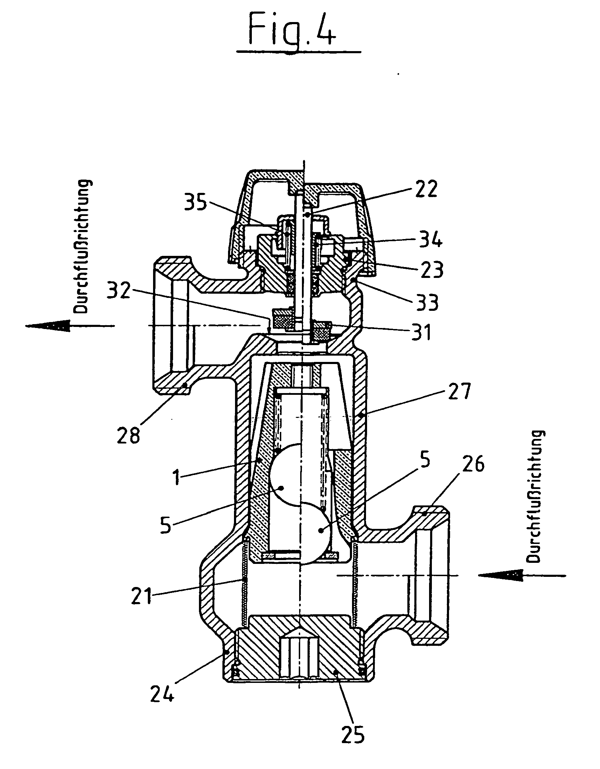

Nachfolgend wird der Aufbau eines beispielhaften Thermostatventils, bei dem ein Durchflussregler gemäß Figur 1 verwendet wird, unter Bezugnahme auf die Darstellung gemäß Figur 4 näher erläutert. Man erkennt, dass das Ventil ein federbelastetes Huboberteil 23 aufweist, mit einer Ventilspindel 22, die am vorderen Ende einen Verschlusskörper 31 aufweist, der gegen einen Ventilsitz 32 im Gehäuse bewegbar ist, um den Durchgang des Fluids durch das Ventil zu verschließen. Es handelt sich im Prinzip um einen herkömmlichen Thermostatventilaufsatz, bei dem die Ventilspindel 22 beispielsweise elektrisch antreibbar ist, wobei auf der Ventilspindel 22 eine Hülse 34 sitzt, die von einer vorgespannten Feder 35 beaufschlagt wird, so dass das Schließen des Verschlussstücks 31 gegen die Kraft der Feder 35 erfolgt.

Der Durchflussregler 1 weist außerdem außen eine vorzugsweise angeformte Dichtlippe 38 auf, wodurch eine Abdichtung zum Gehäuse hin geschaffen wird.

Das Ventil umfasst weiterhin ein Gehäuse mit einem im wesentlichen zylindrischen Mittelteil 27, von dem im unteren Bereich ein erster Eingangsstutzen 26 radial abgeht, durch den das Fluid in das Gehäuseinnere gelangt, wobei es dann durch den Durchflussregler mit dem Regelelement 5 strömt, das hier anders als bei der zuvor beschriebenen Variante eine Kugel ist, wobei der Durchflussregler in Figur 4 in einer gegenüber Figur 1 um 180° gedrehten Position entsprechend der Durchflussrichtung des Fluids dargestellt ist.

Das Ventilgehäuse umfasst weiterhin einen ebenfalls radial abgehenden Ausgangsstutzen 28 im oberen Bereich unterhalb des Ventiloberteils 23, so dass der Ausgangsstutzen 28 parallel aber mit axialem Versatz zu dem Eingangsstutzen 26 abgeht von dem zylindrischen Gehäusemittelteil 27. Es handelt sich also im Prinzip um eine sogenannte Doppeleckanordnung mit zweifachem Winkelversatz in der Strömungsrichtung, welches ermöglicht, das Gehäuse des Thermostatventils insgesamt besonders flach zu bauen, da die vorhandenen Stutzen alle in einer Ebene liegen. Neben dem Eingangsstutzen 26 und dem Ausgangsstutzen 28 sind ein in axialer Verlängerung zu dem Gehäusemittelteil 27 angeordneter weiterer unterer Stutzen 24 vorgesehen, der endseitig in axialer Verlängerung des Gehäusemittelteils 27 angeordnet ist sowie ein diesem am anderen Ende gegenüberliegender kurzer Stutzen 33, der das Ventiloberteil 23 aufnimmt, welches beispielsweise in den Stutzen eingeschraubt werden kann. In dem Bereich zwischen dem Gehäusemittelteil 27 und dem unteren endseitigen Stutzen 24, der über ein einschraubbares Verschlussstück 25 verschlossen ist, befindet sich in axialer Verlängerung zu dem Mantelteil 1 mit dem Regelelement 5 ein ringförmiger Schmutzfänger 21, der aus einem Drahtsieb oder einem ähnlichen siebartigen Material bestehen kann. Wie man sieht, ist der Schmutzfänger 21 etwa in Höhe des Eingangsstutzens 26 des Gehäuses angeordnet, so dass das dort einströmende Fluid durch den Schmutzfänger 21 strömt und insbesondere gröbere Partikel von diesem abgehalten werden, damit diese nicht in den Bereich des Regelelements 5 gelangen und dessen Beweglichkeit beeinträchtigen können.

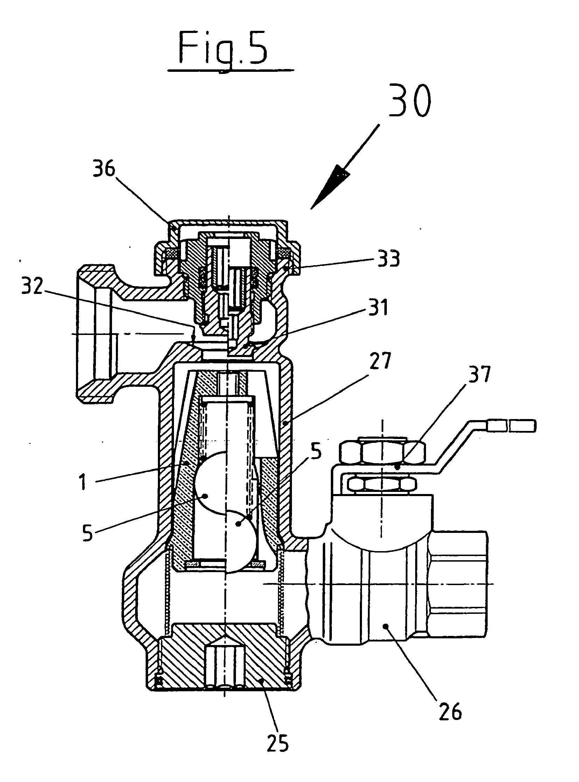

Figur 5 zeigt eine alternative Variante der Erfindung, bei der das Ventil im Prinzip in den Gehäuseteilen ebenso aufgebaut ist, wie das zuvor beschriebene Ventil gemäß Figur 4. Auch bei dem Ventil gemäß Figur 5 ist das Mantelteil 1 mit dem Regelelement 5 in dem zylindrischen Gehäusemittelteil 27 eingesetzt. Anders als jedoch bei der zuvor beschriebenen Thermostatventilvariante ist bei der Variante gemäß Figur 5 ein manuell betätigbares Ventiloberteil 30 in den Stutzen 33 eingesetzt, so dass man das Ventil durch Betätigung des Verschlusskörpers 31, dem wiederum ein Ventilsitz 32 des Gehäuses zugeordnet ist, das Ventil öffnen bzw. verschließen kann. Die Durchflussrichtung und die Funktion des Durchflussreglers mit dem Regelelement 5 entspricht im übrigen dem zuvor anhand von Figur 4 beschriebenen Ausführungsbeispiel. Durch Herausschrauben des Verschlussstücks 25 ist das Innere des Ventilgehäuses für den Service zugänglich und es kann beispielsweise der Durchflussregler 1, 5 ausgetauscht werden. Nach Abnehmen einer auf den oberen Stutzen 33 aufgeschraubten Kappe 36 ist das manuell betätigbare Ventiloberteil 30 zugänglich. Außerdem ist hier noch im Bereich des Eingangsstutzens 26 ein betätigbarer Kugelhahn 37 angeordnet, damit man auch hier absperren kann, wenn das Ventil z. B. zur Wartung von unten her geöffnet werden soll.

### Bezugszeichenliste

- 1.: Mantelteil
- 2.: Bohrung
- 3.: Nut
- 4.: Druckfeder
- 5.: Regelelement
- 6.: Dichtelement
- 8.: Justierschraube
- 11.: Absatz
- 12.: Bohrung
- 13.: Gewindebohrung
- 14.: Anschlag
- 21.: Schmutzfänger
- 22.: Ventilspindel
- 23.: Huboberteil
- 24.: unterer Stutzen
- 25.: Verschlussstück
- 26.: Eingangsstutzen
- 27.: zylindrisches Mittelteil
- 28.: Ausgangsstutzen
- 30.: Ventiloberteil
- 31.: Verschlusskörper
- 32.: Ventilsitz
- 33.: Stutzen
- 34.: Hülse
- 35.: Feder
- 36.: Kappe

## Patentansprüche

1. Durchflussregler umfassend ein feststehendes Mantelteil (1), welches im Wesentlichen in axialer Richtung von einem Fluid durchströmt wird und ein innerhalb des Mantelteils (1) gegen eine Federkraft axial verschiebbares Regelelement (5), wobei der Querschnitt von Durchflussöffnungen durch den Durchflussregler abhängig von der jeweiligen Stellung des Regelelements (5) variiert, wobei das Regelelement (5) eine geschlossene Umfangsfläche aufweist, und das Mantelteil (1) in dem Abschnitt, innerhalb dessen das Regelelement (5) verschiebbar ist, einen variierenden Innenquerschnitt aufweist, so dass sich der verfügbare Durchflussquerschnitt für das Fluid zwischen dem äußeren Umfang des Regelelements (5) und dem Innenquerschnitt des Mantelteils (1) bei Einwärtsbewegung des Regelelements reduziert,
**dadurch gekennzeichnet,**
**dass** das Mantelteil (1) am inneren Umfang wenigstens eine im wesentlichen in axialer Richtung verlaufende Nut oder nutförmige Ausbuchtung (3) aufweist, deren Querschnitt sich in Einwärtsrichtung reduziert.

2. Durchflussregler nach Anspruch 1, **dadurch gekennzeichnet, dass** die Nut oder nutförmige Ausbuchtung (3) des Mantelteils (1) im Längsschnitt in axialer Richtung gesehen mindestens abschnittsweise eine parabolische Kontur aufweist.

3. Durchflussregler nach Anspruch 1 oder 2, **dadurch gekennzeichnet, dass** das Mantelteil (1) eine zylindrische oder leicht kegelförmige Bohrung (2) aufweist, innerhalb der sich das Regelelement (5) bewegt.

4. Durchflussregler nach einem der Ansprüche 1 bis 3, **dadurch gekennzeichnet, dass** das Regelelement (5) in seinem Durchmesser so dimensioniert ist, dass es maßlich passend in der Bohrung (2) des Mantelteils (1) geführt ist.

5. Durchflussregler nach einem der Ansprüche 1 bis 4, **dadurch gekennzeichnet, dass** das Regelelement (5) an seinem Umfang wenigstens ein Dichtelement, vorzugsweise eine Dichtlippe (6) aufweist, die zur Innenwandung der Bohrung (2) hin abdichtet und/oder das Mantelteil (1) am Umfang eine vorzugsweise angeformte Dichtlippe (38) aufweist.

6. Durchflussregler nach einem der Ansprüche 1 bis 5, **dadurch gekennzeichnet, dass** das Regelelement jeweils in beiden endseitigen Bereichen je ein zur Bohrung (2) hin abdichtendes Dichtelement (6), vorzugsweise eine angespritzte Dichtlippe aufweist.

7. Durchflussregler nach einem der Ansprüche 1 bis 6, **dadurch gekennzeichnet, dass** das Regelelement (5) im Wesentlichen die Form eines Zylinders oder einer Kugel aufweist.

8. Durchflussregler nach einem der Ansprüche 1 bis 7, **dadurch gekennzeichnet, dass** der sich in axialer Richtung ändernde Innenquerschnitt des Mantelteils (1) so dimensioniert ist, dass bei axialem Hub des Regelelements (5) und sich änderndem Differenzdruck über einen vorgegebenen Druckbereich ein konstanter Volumenstrom des Fluids durch den Durchflussregler erzielt wird.

9. Durchflussregler nach einem der Ansprüche 1 bis 8, **dadurch gekennzeichnet, dass** das Regelelement (5) ein Kunststoffspritzteil ist.

10. Durchflussregler nach einem der Ansprüche 1 bis 9, **dadurch gekennzeichnet, dass** wenigstens eine Nut oder nutförmige Ausbuchtung (3) über die gesamte Länge des Mantelteils (1) geführt ist.

11. Durchflussregler nach einem der Ansprüche 1 bis 10, **dadurch gekennzeichnet, dass** durch einen Absatz (11) am Ende der Bohrung (2) ein Anschlag für das Regelelement (5) in seiner maximalen Hubposition gegeben ist.

12. Durchflussregler nach einem der Ansprüche 1 bis 11, **dadurch gekennzeichnet, dass** der Querschnitt der Nut bzw. nutförmigen Ausbuchtung (3) in der Wandung des Mantelteils (1) in axialer Richtung etwas bis zu dem Absatz (11) hin abnimmt.

13. Durchflussregler nach einem der Ansprüche 1 bis 12, **dadurch gekennzeichnet, dass** der Querschnitt der Nut (3) in der Wandung des Mantelteils (1) in axialer Richtung nichtlinear abnimmt.

14. Thermostatventil, **dadurch gekennzeichnet, dass** in dessen Gehäuse ein Durchflussregler gemäß einem der Ansprüche 1 bis 13 eingesetzt ist.

15. Thermostatventil nach Anspruch 14, **dadurch gekennzeichnet, dass** dieses ein federbelastetes Huboberteil mit Ventilspindel und Verschlussstück aufweist, dem ein Ventilsitz im Gehäuse zugeordnet ist, für ein automatisches Öffnen und Schließen des Ventils.

16. Thermostatventil nach Anspruch 14, **dadurch gekennzeichnet, dass** dieses ein manuell betätigbares Ventiloberteil (30) mit Verschlusskörper (31) aufweist, dem ein Ventilsitz (32) im Gehäuse zugeordnet ist, für ein manuelles Öffnen und Schließen des Ventils.

17. Thermostatventil nach einem der Ansprüche 14 bis 16, **dadurch gekennzeichnet, dass** dieses einen im Innen des Gehäuses angeordneten dem Durchflussregler in Strömungsrichtung vorgeschalteten Schmutzfänger (21), vorzugsweise in Form eines Drahtsiebs aufweist.

18. Thermostatventil, vorzugsweise nach einem der Ansprüche 14 bis 17, **dadurch gekennzeichnet, dass** dieses einen ersten radial abgehenden Eingangsstutzen (26) aufweist, einen im wesentlichen zylindrischen Gehäusemittelteil (27) und einen mit axialem Versatz zu dem Eingangsstutzen (26) ebenfalls radial abgehenden Ausgangsstutzen (28).

19. Thermostatventil nach einem der Ansprüche 14 bis 18, **dadurch gekennzeichnet, dass** das federbelastete Huboberteil (23) bzw. das manuell zu betätigende Ventiloberteil in axialer Verlängerung zu dem Mittelteil (27) des Gehäuses angeordnet ist und die Achse des Ausgangsstutzens (28) rechtwinklig zur Achse der Hubbewegung des Verschlussstücks (31) angeordnet ist.

20. Thermostatventil nach einem der Ansprüche 14 bis 19, **dadurch gekennzeichnet, dass** das Gehäuse einen weiteren Stutzen (24) aufweist, der über ein vorzugsweise einschraubbares Verschlussstück (25) verschließbar und über den das Gehäuseinnere zugänglich ist.

21. Thermostatventil nach einem der Ansprüche 14 bis 20, **dadurch gekennzeichnet, dass** der Stutzen (24) einem das Ventiloberteil (23) aufnehmenden Stutzen (33) in axialer Verlängerung am anderen Ende des Gehäuses gegenüberliegend angeordnet ist.

## Claims

1. Flow controller comprising a fixed casing part (1), which is flowed through substantially in the axial direction by a fluid, and a control element (5), which is axially displaceable within the casing part (1) counter to a spring force, wherein the cross section of flow openings through the flow controller varies in dependence on the respective setting of the control element (5), wherein the control element (5) has a closed peripheral surface, and the casing part (1), in the portion within which the control element (5) is displaceable, has a variable inner cross section, so that the available flow cross section for the fluid between the outer periphery of the control element (5) and the inner cross section of the casing part (1) diminishes upon inward movement of the control element, **characterized in that** the casing part (1), on the inner periphery, has at least one groove or groove-shaped bulge (3), running substantially in the axial direction, the cross section of which diminishes in the inward direction.

2. Flow controller according to Claim 1, **characterized in that** the groove or groove-shaped bulge (3) of the casing part (1) has in longitudinal section, viewed in the axial direction, a parabolic contour, at least in some portions.

3. Flow controller according to Claim 1 or 2, **characterized in that** the casing part (1) has a cylindrical or slightly conical bore (2), within which the control element (5) moves.

4. Flow controller according to one of Claims 1 to 3, **characterized in that** the control element (5) is dimensioned in terms of its diameter such that it is guided in the bore (2) of the casing part (1) in a dimensionally fitting manner.

5. Flow controller according to one of Claims 1 to 4, **characterized in that** the control element (5) has on its periphery at least one sealing element, preferably a sealing lip (6), which forms a seal with respect to the inner wall of the bore (2), and/or the casing part (1) has on the periphery a sealing lip (38), which is preferably moulded-on.

6. Flow controller according to one of Claims 1 to 5, **characterized in that** the control element has respectively, in both end-side regions, a respective sealing element (6), which forms a seal with respect to the bore (2), preferably an injection-moulded sealing lip.

7. Flow controller according to one of Claims 1 to 6, **characterized in that** the control element (5) has substantially the shape of a cylinder or sphere.

8. Flow controller according to one of Claims 1 to 7, **characterized in that** the inner cross section of the casing part (1), which varies in the axial direction, is dimensioned such that, upon axial lifting of the control element (5) and changing differential pressure over a predefined pressure range, a constant volumetric flow rate of the fluid through the flow controller is obtained.

9. Flow controller according to one of Claims 1 to 8, **characterized in that** the control element (5) is a plastics injection-moulded part.

10. Flow controller according to one of Claims 1 to 9, **characterized in that** at least one groove or groove-shaped bulge (3) is guided over the entire length of the casing part (1).

11. Flow controller according to one of Claims 1 to 10, **characterized in that** a stop for the control element (5) in its maximum lift position is given by a step (11) at the end of the bore (2).

12. Flow controller according to one of Claims 1 to 11, **characterized in that** the cross section of the groove or groove-shaped bulge (3) in the wall of the casing part (1) decreases somewhat up to the step (11) in the axial direction.

13. Flow controller according to one of Claims 1 to 12, **characterized in that** the cross section of the groove (3) in the wall of the casing part (1) decreases non-linearly in the axial direction.

14. Thermostat valve, **characterized in that** in its housing there is inserted a flow controller according to one of Claims 1 to 13.

15. Thermostat valve according to Claim 14, **characterized in that** it has a spring-loaded lift top part with valve spindle and closure part, to which a valve seat in the housing is assigned, for an automatic opening and closing of the valve.

16. Thermostat valve according to Claim 14, **characterized in that** it has a manually actuable valve top part (30) with closure body (31), to which a valve seat (32) in the housing is assigned, for a manual opening and closing of the valve.

17. Thermostat valve according to one of Claims 14 to 16, **characterized in that** it has a dirt trap (21), preferably in the form of a wire screen, which is disposed inside the housing and is connected upstream of the flow controller in the direction of flow.

18. Thermostat valve, preferably according to one of Claims 14 to 17, **characterized in that** it has a first radially outgoing inlet socket (26), a substantially cylindrical housing middle part (27), and an outlet socket (28), which likewise leads off radially with axial offset to the inlet socket (26).

19. Thermostat valve according to one of Claims 14 to 18, **characterized in that** the spring-loaded lift top part (23) or the manually actuable valve top part is disposed in axial extension to the middle part (27) of the housing, and the axis of the outlet socket (28) is disposed at right angles to the axis of the lifting movement of the closure part (31).

20. Thermostat valve according to one of Claims 14 to 19, **characterized in that** the housing has a further socket (24), which can be closed off by a preferably screw-in closure part (25) and via which the housing interior can be accessed.

21. Thermostat valve according to one of Claims 14 to 20, **characterized in that** the socket (24) is disposed opposite a socket (33) in axial extension at the other end of the housing, which socket (33) receives the valve top part (23).

## Revendications

1. Régulateur de débit comprenant une partie d'enveloppe fixe (1), qui est parcourue essentiellement dans la direction axiale par un fluide et un élément de régulation (5) déplaçable axialement à l'intérieur de la partie d'enveloppe (1) à l'encontre d'une force de ressort, la section transversale d'ouvertures de passage à travers le régulateur de débit variant en fonction de la position respective de l'élément de régulation (5), l'élément de régulation (5) présentant une surface périphérique fermée et la partie d'enveloppe (1) présentant, dans la portion à l'intérieur de laquelle l'élément de régulation (5) peut être déplacé, une section transversale interne variable, de sorte que la section transversale de passage disponible pour le fluide entre la périphérie extérieure de l'élément de régulation (5) et la section transversale interne de la partie d'enveloppe (1) diminue lors du déplacement vers l'intérieur de l'élément de régulation,
**caractérisé en ce que**
la partie d'enveloppe (1) présente, sur la périphérie interne au moins une rainure s'étendant essentiellement dans la direction axiale, ou une indentation en forme de rainure (3), dont la section transversale diminue dans la direction allant vers l'intérieur.

2. Régulateur de débit selon la revendication 1, **caractérisé en ce que** la rainure ou l'indentation en forme de rainure (3) de la partie d'enveloppe (1) présente en coupe longitudinale, vu dans la direction axiale, au moins en partie un contour parabolique.

3. Régulateur de débit selon la revendication 1 ou 2, **caractérisé en ce que** la partie d'enveloppe (1) présente un alésage (2) cylindrique ou légèrement conique, à l'intérieur duquel se déplace l'élément de régulation (5).

4. Régulateur de débit selon l'une quelconque des revendications 1 à 3, **caractérisé en ce que** l'élément de régulation (5) est dimensionné de telle sorte en diamètre qu'il est guidé de manière à s'adapter du point de vue dimensionnel dans l'alésage (2) de la partie d'enveloppe (1).

5. Régulateur de débit selon l'une quelconque des revendications 1 à 4, **caractérisé en ce que** l'élément de régulation (5) présente sur sa périphérie au moins un élément d'étanchéité, de préférence une lèvre d'étanchéité (6), qui réalise l'étanchéité vis-à-vis de la paroi interne de l'alésage (2) et/ou la partie d'enveloppe (1) présente sur la périphérie une lèvre d'étanchéité (38) de préférence façonnée.

6. Régulateur de débit selon l'une quelconque des revendications 1 à 5, **caractérisé en ce que** l'élément de régulation présente à chaque fois dans les deux parties d'extrémité un élément d'étanchéité (6) réalisant l'étanchéité vis-à-vis de l'alésage (2), de préférence une lèvre d'étanchéité moulée par injection.

7. Régulateur de débit selon l'une quelconque des revendications 1 à 6, **caractérisé en ce que** l'élément de régulation (5) présente essentiellement la forme d'un cylindre ou d'une sphère.

8. Régulateur de débit selon l'une quelconque des revendications 1 à 7, **caractérisé en ce que** la section transversale interne de la partie d'enveloppe (1) variant dans la direction axiale est dimensionnée de telle sorte que lors de la levée axiale de l'élément de régulation (5), et de la variation de la pression différentielle sur une plage de pression prédéfinie, un débit volumique constant du fluide est obtenu à travers le régulateur de débit.

9. Régulateur de débit selon l'une quelconque des revendications 1 à 8, **caractérisé en ce que** l'élément de régulation (5) est une pièce moulée par injection de plastique.

10. Régulateur de débit selon l'une quelconque des revendications 1 à 9, **caractérisé en ce qu'**au moins une rainure ou une indentation en forme de rainure (3) s'étend sur toute la longueur de la partie d'enveloppe (1).

11. Régulateur de débit selon l'une quelconque des revendications 1 à 10, **caractérisé en ce qu'**un épaulement (11) à l'extrémité de l'alésage (2) constitue une butée pour l'élément de régulation (5) dans sa position de levée maximale.

12. Régulateur de débit selon l'une quelconque des revendications 1 à 11, **caractérisé en ce que** la section transversale de la rainure ou de l'indentation en forme de rainure (3) dans la paroi de la partie d'enveloppe (1) diminue dans la direction axiale approximativement jusqu'à l'épaulement (11).

13. Régulateur de débit selon l'une quelconque des revendications 1 à 12, **caractérisé en ce que** la section transversale de la rainure (3) diminue de manière non linéaire dans la direction axiale dans la paroi de la partie d'enveloppe (1).

14. Soupape thermostatique, **caractérisée en ce qu'**un régulateur de débit selon l'une quelconque des revendications 1 à 13 est inséré dans son boîtier.

15. Soupape thermostatique selon la revendication 14, **caractérisée en ce qu'**elle présente une partie supérieure de levage sollicitée par ressort avec une tige de soupape et une pièce de fermeture, à laquelle est associé un siège de soupape dans le boîtier, pour une ouverture et une fermeture automatiques de la soupape.

16. Soupape thermostatique selon la revendication 14, **caractérisée en ce qu'**elle présente une partie supérieure de soupape (30) actionnable manuellement, avec un corps de fermeture (31), auquel est associé un siège de soupape (32) dans le boîtier, pour une ouverture et une fermeture manuelles de la soupape.

17. Soupape thermostatique selon l'une quelconque des revendications 14 à 16, **caractérisée en ce qu'**elle présente un piège à poussière (21) disposé à l'intérieur du boîtier et monté en amont du régulateur de débit dans lé sens de l'écoulement, de préférence sous la forme d'un tamis métallique.

18. Soupape thermostatique, de préférence selon l'une quelconque des revendications 14 à 17, **caractérisée en ce qu'**elle présente un premier raccord d'entrée (26) saillant radialement, une partie centrale de boîtier (27) essentiellement cylindrique et un raccord de sortie (28) saillant également radialement, décalé axialement par rapport au raccord d'entrée (26).

19. Soupape thermostatique selon l'une quelconque des revendications 14 à 18, **caractérisée en ce que** la partie supérieure de levage (23) sollicitée par ressort ou la partie supérieure de soupape à actionnement manuel est disposée dans le prolongement axial de la partie centrale (27) du boîtier, et l'axe du raccord de sortie (28) est disposé à angle droit par rapport à l'axe du mouvement de levage de la pièce de fermeture (31).

20. Soupape thermostatique selon l'une quelconque des revendications 14 à 19, **caractérisée en ce que** le boîtier présente un autre raccord (24) qui peut être fermé par une pièce de fermeture (25) de préférence vissable, et par le biais duquel l'intérieur du boîtier est accessible.

21. Soupape thermostatique selon l'une quelconque des revendications 14 à 20, **caractérisée en ce que** le raccord (24) est disposé en regard d'un raccord (33) recevant la partie supérieure de la soupape (23), dans le prolongement axial au niveau de l'autre extrémité du boîtier.
